(19)

Europäisches
Patentamt
European
Patent Office
Office européen
des brevets

(11) **EP 2 578 623 A2**

(12) **EUROPEAN PATENT APPLICATION**

(43) Date of publication:
**10.04.2013 Bulletin 2013/15**

(51) Int Cl.:
*C08J 9/00* [(2006.01)]   *C08J 9/10* [(2006.01)]
*C09K 3/10* [(2006.01)]

(21) Application number: **12185763.5**

(22) Date of filing: **25.09.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **04.10.2011 JP 2011219699
13.03.2012 JP 2012055831**

(71) Applicant: **NITTO DENKO CORPORATION
Ibaraki-shi,
Osaka 567-8680 (JP)**

(72) Inventor: **Ui, Takehiro
Japan, 567-8680, (JP)**

(74) Representative: **Schwabe - Sandmair - Marx
Patentanwälte
Stuntzstraße 16
81677 München (DE)**

(54) **Foaming composition for filling and sealing, foaming member for filling and sealing, foam for filling and sealing, and filling method using the same**

(57)   A foaming composition for filling and sealing contains a polymer, 4,4'-oxybis(benzene sulfonyl hydrazide) and/or azodicarbonamide, and a hydrocalumite.

FIG. 1

EP 2 578 623 A2

**Description**

BACKGROUND OF THE INVENTION

Field of the Invention

The present invention relates to a foaming composition for filling and sealing, a foaming member for filling and sealing, a foam for filling and sealing, and a filling method using the same, and particularly to a foam for filling and sealing with which inner spaces of various hollow members are filled, a filling method using the same, and a foaming member for filling and sealing and a foaming composition for filling and sealing, each for forming the foam for filling and sealing.

Description of the Related Art

Conventionally, it has been known to fill a hollow space of a hollow member, which is formed as a closed cross section of an automotive pillar or the like, with a foam for the purpose of preventing the vibration and noise of an engine, wind noise, and the like from being transmitted to a vehicle interior.

For example, it has been proposed that a foaming composition for filling containing an ethylene-vinyl acetate copolymer, 4,4'-oxybis(benzene sulfonyl hydrazide) (hereinafter abbreviated as OBSH) or azodicarbonamide (hereinafter abbreviated as ADCA), and a magnesium oxide is prepared, placed in an inner space of a hollow member, and then heated to be foamed to fill the inner space of the hollow member with a foam for filling (see, e.g., Japanese Unexamined Patent No. 2005-97586).

In Japanese Unexamined Patent No. 2005-97586, rust is prevented from developing at the inner surface of a hollow member made of a steel plate.

It has also been proposed that a magnesium carbonate is blended as a filler (inorganic filler) in a foaming composition for filling (see, e.g., Japanese Unexamined Patent No. 2008-7704).

SUMMARY OF THE INVENTION

However, a hollow member may be placed in a high-temperature and high-humidity atmosphere and, in that case also, a foam for filling is required to have more excellent rust prevention.

However, the foams for filling obtained from the foaming compositions for filling of Japanese Unexamined Patent Nos. 2005-97586 and 2008-7704 may not be able to sufficiently satisfy the required excellent rust prevention mentioned above in a high-temperature and high-humidity atmosphere.

It is therefore an object of the present invention to provide a foam for filling and sealing capable of giving excellent rust prevention even in a high-temperature and high-humidity atmosphere, a filling method using the same, and a foaming member for filling and sealing and a foaming composition for filling and sealing, each for forming the foam for filling and sealing.

A foaming composition for filling and sealing of the present invention contains a polymer, 4,4'-oxybis(benzene sulfonyl hydrazide) and/or azodicarbonamide, and a hydrocalumite.

A foaming member for filling and sealing of the present invention includes the foaming composition for filling and sealing mentioned above, and a fitting member attached to the foaming composition for filling and sealing to be capable of being mounted in an inner space of a hollow member.

A foam for filling and sealing of the present invention is obtained by foaming the foaming composition for filling and sealing mentioned above.

A filling method using a foam for filling and sealing of the present invention includes the steps of placing the foaming composition for filling and sealing mentioned above in an inner space of a hollow member made of a metal, and foaming the foaming composition for filling and sealing to produce the foam for filling and sealing.

The foam for filling and sealing of the present invention obtained by foaming the foaming composition for filling and sealing of the present invention has excellent rust prevention.

Therefore, even when the foregoing foaming composition for filling and sealing is foamed to fill the inner space of the hollow member with the foregoing foam for filling and sealing according to the filling method using the foam for filling and sealing of the present invention and then the hollow member made of the metal is placed in a high-temperature and a high-humidity atmosphere, it is possible to prevent subsequent development of rust at the inner surface of the hollow member.

BRIEF DESCRIPTION OF THE DRAWINGS

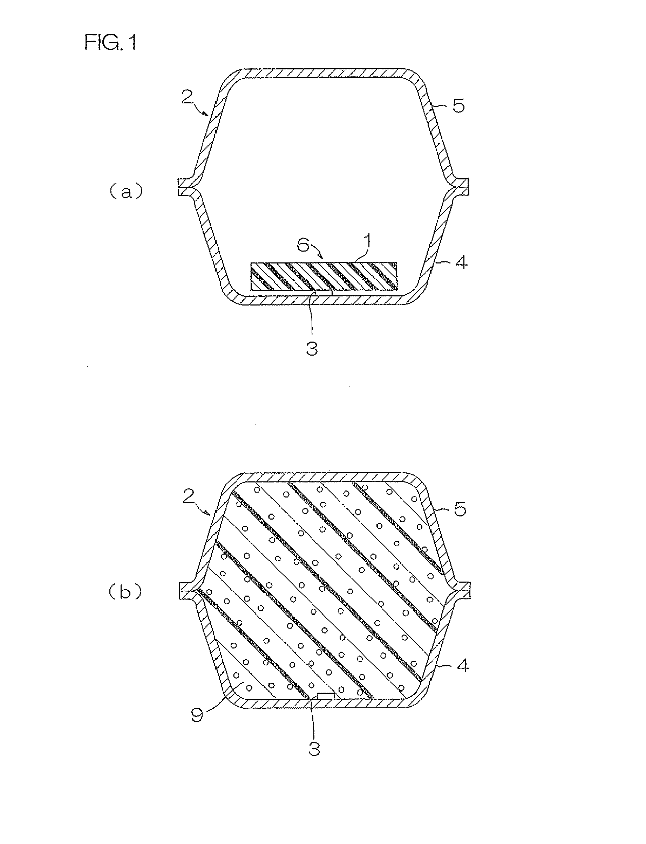

FIG. 1 is a process view of a method of filling and sealing an inner space of an automotive pillar using an embodiment of a foaming composition for filling and sealing, a foaming member for filling and sealing, and a foam for filling and sealing of the present invention,

(a) showing the step of attaching a fitting member to the foaming composition for filling and sealing to produce the foaming member for filling and sealing, and placing it in the pillar, and
(b) showing the step of foaming the foaming composition for filling and sealing by heating to fill the inner space of the pillar with the foam for filling and sealing.

DETAILED DESCRIPTION OF THE INVENTION

A foaming composition for filling and sealing of the present invention contains a polymer, 4,4'-oxybis(benzene sulfonyl hydrazide) (OBSH) and/or azodicarbonamide (ADCA), and a hydrocalumite.

Examples of the polymer include a resin and/or rubber obtained through polymerization of a monomer having at least one ethylenically unsaturated double bond. Specific examples of such a resin and/or rubber include a resin composed of a vinyl polymer (polymer of a vinyl monomer) such as a vinyl copolymer having an ester bond (-COO-) in its side chain, an olefin polymer, polyvinyl butyral resin and polyvinyl chloride resin, and a rubber composed of a conjugated diene polymer (polymer of a monomer containing a conjugated diene) such as, e.g., styrene butadiene rubber (SBR), polybutadiene rubber (BR), and ethylene propylene diene rubber (EPDM). Examples of the polymer include not only the foregoing, but also a resin composed of a polycondensate such as polyester resin or polyamide resin. These polymers can be used alone or in combination of two or more kinds.

As the polymer, the resin and/or rubber obtained through polymerization of a monomer having at least one ethylenically unsaturated double bond is used preferably. More preferably, the resin made of the vinyl polymer is used or, most preferably, the vinyl copolymer or olefin polymer is used.

Specific examples of the vinyl copolymer include a copolymer of a vinyl-group-containing ester and an olefin.

Examples of the vinyl-group-containing ester include fatty acid vinyl ester and (meth)acrylate.

Examples of the fatty acid vinyl ester include vinyl acetate, vinyl propionate, and vinyl butyrate.

The (meth)acrylate is an acrylate and/or methacrylate. Examples of the (meth)acrylate include methyl(meth) acrylate, ethyl(meth)acrylate, propyl(meth)acrylate, isopropyl(meth)acrylate, and butyl(meth)acrylate.

These vinyl-group-containing esters can be used alone or in combination.

As the vinyl-group-containing ester, the fatty acid vinyl ester is used preferably or, more preferably, the vinyl acetate is used.

Examples of the olefin include ethylene and propylene. These olefins can be used alone or in combination.

As the olefin, ethylene is used preferably.

Specific examples of the foregoing vinyl copolymer include an olefin-fatty acid vinyl ester copolymer such as ethylene-vinyl acetate copolymer (EVA), ethylene-vinyl propionate copolymer, ethylene-vinyl butyrate copolymer, and ethylene-propylene-vinyl acetate copolymer, and an olefin-(meth)acrylate copolymer such as ethylene-methyl(meth) acrylate copolymer, ethylene-ethyl(meth)acrylate copolymer (EEA/EMA), ethylene-propyl(meth)acrylate copolymer, and ethylene-butyl(meth)acrylate copolymer.

The foregoing vinyl copolymer is a block copolymer or random copolymer.

These vinyl copolymers can be used alone or in combination of two or more kinds.

As the vinyl copolymer, the olefin-fatty acid vinyl ester copolymer is used preferably or, more preferably, the EVA is used.

The content of the vinyl-group-containing ester (specifically fatty acid vinyl ester, or preferably vinyl acetate) in the vinyl copolymer is in a range of, e.g., 5 to 60 mass%, or preferably 10 to 45 mass%.

The olefin polymer is a hydrocarbon-based polymer which does not substantially have an oxygen-atom containing portion such as an ester bond in a molecular thereof. Specifically, the olefin polymer is a polymer of an olefin.

Examples of the olefin include the same compounds as the olefins shown by way of example by the monomers forming the vinyl copolymer.

Examples of the olefin polymer include polyethylene (ethylene homopolymer), polypropylene (propylene homopolymer), and an ethylene-propylene copolymer.

These olefin polymers can be used alone or in combination.

As the olefin polymer, polyethylene is used preferably.

The polymer has a melt flow rate (MFR) which is in a range of, e.g., not more than 5.0 g/10 min, or preferably not more than 4.5 g/10 min and, e.g., not less than 1.0 g/10 min, or preferably not less than 1.5 g/10 min. Note that the MFR is determined by a measurement method according to JIS K 7210 (1999) or JIS K 6922-1 (1997). Specifically, the MFR of the vinyl copolymer is determined by measurement at a heating temperature of 190°C under a load of 21.18 N according to JIS K 7210 (1999), and the MFR of the olefin polymer is determined by measurement at a heating temperature of 190°C under a load of 21.18 N according to JIS K 6922-1 (1997).

The blending ratio of the polymer to the foaming composition for filling and sealing is in a range of, e.g., 50 to 90 mass%, or preferably 60 to 85 mass%.

The OBSH and the ADCA are foaming agents each for foaming the foaming composition for filling and sealing.

For example, both of the OBSH and the ADCA can be used in combination. However, preferably, the OBSH is used alone, or preferably, the ADCA is used alone.

The total blending proportion of the OBSH and the ADCA is in a range of 5 to 30 parts by mass, or preferably 10 to 25 parts by mass based on 100 parts by mass of the polymer.

When the blending proportion of the OBSH and the ADCA is less than the lower limit value shown above, the foaming composition for filling and sealing is not sufficiently foamed to degrade fillability and sealability. Accordingly, the foaming composition for filling and sealing needs to be formed in a large scale (size), which may degrade assemblability.

On the other hand, when the blending proportion of the OBSH and the ADCA exceeds the upper limit value shown above, the expansion ratio (volume expansion ratio described later) of the foam for filling and sealing does not improve in proportion to the blending proportion, and therefore an economical advantage may not be able to be obtained.

The hydrocalumite is blended in the foaming composition for filling and sealing to serve as a corrosion inhibitor which gives rust prevention to the foam for filling and sealing.

The hydrocalumite is a water-containing oxidized mineral of calcium and aluminum given by, e.g., the following general formula (1):

$$3CaO \cdot Al_2O_3 \cdot CaX_{2/m} \cdot nH_2O \qquad (1)$$

(where X represents a univalent or bivalent anion, m represents the valence of the anion, and n represents an integer of not less than 0).

Examples of the univalent or bivalent anion represented by X in the formula (1) include $OH^-$, $ClO_4^-$, $NO_3^-$, $NO_2^-$, $H_2PO_2^-$, $HCO_3^-$, $HPO_3^{2-}$, $HPO_4^{2-}$, $CH_3COO^-$, $Cl^-$, $[(CHCOO)_2]^{2-}$, $[C_6H_4(COO)_2]^{2-}$, $CO_3^{2-}$, and $SO_4^{2-}$.

Preferably, the $NO_2^-$ (nitrite anion or nitrous acid anion) or $CO_3^{2-}$ (carbonate anion) is used.

Note that the hydrocalumite is classified based on the anion represented by X. For example, when the anion is the nitrite anion, the hydrocalumite is classified as a nitrite-type hydrocalumite and, when the anion is the carbonate anion, the hydrocalumite is classified as a carbonate-type hydrocalumite.

Preferably, n is 1 to 50, or more preferably 5 to 25.

Specific examples of the hydrocalumite include those described in, e.g., Japanese Unexamined Patent No. 2005-139211, which are specifically

a nitrate-type hydrocalumite given by the following formula (2):

$$3CaO \cdot Al_2O_3 \cdot Ca(NO_3)_2 \cdot 10H_2O \qquad (2),$$

a nitrite-type hydrocalumite given by the following formula (3):

$$3CaO \cdot Al_2O_3 \cdot Ca(NO_2)_2 \cdot 10H_2O \qquad (3),$$

a chloride-type hydrocalumite given by the following formula (4):

$$3CaO \cdot Al_2O_3 \cdot CaCl_2 \cdot 10H_2O \qquad (4),$$

a sulfate-type hydrocalumite given by the following formula (5):

$$3CaO \cdot Al_2O_3 \cdot 3CaSO_4 \cdot nH_2O \qquad (5),$$

a carbonate-type hydrocalumite given by the following formula (6):

$$3CaO \cdot Al_2O_3 \cdot CaCO_3 \cdot 10H_2O \qquad (6),$$

a hydrogen-carbonate-type hydrocalumite given by the following formula (7):

$$3CaO \cdot Al_2O_3 \cdot 3Ca(HCO_3)_2 \cdot 30H_2O \qquad (7),$$

an acetate-type hydrocalumite given by the following formula (8):

$$3CaO \cdot Al_2O_3 \cdot Ca(CH_3COO)_2 \cdot 8H_2O \qquad (8),$$

and the like.

Among these hydrocalumites, the nitrite-type hydrocalumite or carbonate-type hydrocalumite. is used preferably.

The nitrite-type hydrocalumite or carbonate-type hydrocalumite can give more excellent rust prevention to the foam for filling and sealing.

The hydrocalumite is solid at a room temperature, and the shape thereof is not particularly limited. Examples of the shape of the hydrocalumite include a spherical shape, a needle-like shape, a plate-like shape, and the like.

The average value of the maximum lengths of the hydrocalumite (average particle size when the hydrocalumite is spherical) is in a range of, e.g., 1 to 20 $\mu$m, or preferably 1 to 10 $\mu$m.

Such a hydrocalumite is produced by a known method. Specifically, the hydrocalumite is produced according to the method described in Japanese Unexamined Patent No. 2005-139211.

As the hydrocalumite, a commercially available product can be used. For example, SALCUT™ (nitrite-type hydrocalumite available from Nippon Chemical Industrial Co., Ltd.) or E13™ (carbonate-type hydrocalumite available from Katsuta Kako K.K.) is used.

The blending proportion of the hydrocalumite is in a range of, e.g., 14 to 143 parts by mass, preferably 20 to 100 parts by mass, or more preferably 25 to 75 parts by mass based on 100 parts by mass of the OBSH. The blending proportion of the hydrocalumite is in a range of, e.g., 9 to 50 parts by mass, preferably 9 to 25 parts by mass, or more preferably 10 to 20 parts by mass based on 100 parts by mass of the ADCA.

When the blending proportion of the hydrocalumite is less than the ranges shown above, the rust prevention of the foam for filling and sealing may deteriorate.

On the other hand, when the blending proportion of the hydrocalumite exceeds the ranges shown above, the expansion ratio of the foam for filling and sealing may deteriorate, or an economical advantage may not be able to be obtained.

To the foaming composition for filling and sealing of the present invention, known additives such as, e.g., cross-linking agent, cross-linking auxiliary agent, foaming auxiliary agent, softener, other additional corrosion inhibitors, other additional foaming agents (specifically, inorganic foaming agents such as ammonium carbonate, ammonium hydrogen carbonate, sodium hydrogen carbonate, ammonium nitrite, sodium borohydride, and azide), processing aid, stabilizer, plasticizer, oxidation inhibitor, antioxidant, pigment, coloring agent, antifungal agent, and fire retardant can also be added at an appropriate ratio in a range which does not inhibit the excellent effects of the present invention.

The cross-linking agent is blended as necessary in the foaming composition for filling and sealing in order to cross-link the polymer. Examples of the cross-linking agent include an organic peroxide.

As the organic peroxide, e.g., a radical forming agent can be used which is decomposed by heating to produce a free radical and allow cross-linking of the polymer. Examples of such an organic peroxide include dicumyl peroxide (DCP), 1,1-di-tertiary-butyl-peroxy-3,3,5-trimethyl-cyclohexane, 2,5-dimethyl-2,5-di-tertiary-butyl-peroxyhexane, 1,3-bis (tertiary-butyl-peroxy-isopropyl)benzene, tertiary-butyl-peroxyketone, and tertiary-butyl-peroxybenzoate.

These organic peroxides can be used alone or in a combination of two or more kinds.

As the organic peroxide, the DCP is used preferably.

The blending proportion of the cross-linking agent is in a range of 0.1 to 10 parts by mass, or preferably 0.5 to 5 parts by mass based on 100 parts by mass of the polymer. When the blending ratio of the cross-linking agent is less than the ranges shown above, a viscosity increase resulting from cross-linking is small and foam cells may be broken due to the pressure of a gas during foaming. On the other hand, when the blending ratio of the cross-linking agent exceeds the foregoing ranges, cross-linking excessively proceeds and a coating of the polymer suppresses the gas pressure during foaming. As a result, foaming at a high expansion ratio is unlikely to occur.

The cross-linking auxiliary agent is blended as necessary in the foaming composition for filling and sealing in order to adjust the degree of cross-linking of the polymer and ensure a high expansion ratio.

Specific examples of the cross-linking auxiliary agent include a functional-group-containing compound having at least three functional groups.

Examples of the functional groups contained in the functional-group-containing compound include (meth)acryloyl group (i.e., acryloyl group ($-COCH=CH_2$) and/or methacryloyl group ($-CO-C(CH_3)=CH_2$)), allyl group ($-CH_2CH=CH_2$), hydroxyimino group ($=N-OH$), imino group ($=NH$), amino group ($-NH_2$), imide group ($-CO-NH-CO-$), carboxyl group ($-COOH$), and vinyl group ($-CH=CH_2$). Preferably, the (meth)acryloyl group is contained.

Specific examples of the functional-group-containing compound include (meth)acrylayl-group-cantaining compounds (i.e., acryloyl-group-containing compound and/or methacryloyl-group-containing compound) such as ethylene glycol di(meth)acrylate (EGDA/EGDMA), trimethylol propane tri(meth)acrylate (TMPTA/TMPTMA), pentaerythritol tri (meth)acrylate, pentaerythritol tetra(meth)acrylate, and dipentaerythritol hexa(meth)acrylate, allyl-group-containing compounds such as triallyl isocyanurate (TAIC) and triallyl cyanurate (TAC), hydroxyimino-group-containing compounds (e.g., oximes) such as p-quinone dioxime, imino- and amino-group-containing compounds such as guanidine, imide-group-containing compounds such as N,N'-m-phenylene bismaleimide, carboxyl-group-containing compounds (e.g., unsaturated fatty acid metal salts) such as zinc acrylate, vinyl-group-containing compounds such as 1,2-polybutadiene, and a sulfur compound such as sulfur.

These cross-linking auxiliary agents can be used alone or in combination.

As the cross-linking auxiliary agent, the (meth)acryloyl-group-containing compound is used preferably. If the cross-linking auxiliary agent is the (meth)acryloyl-group-containing compound, strong cross-linking due to a (meth) acryloyl group can be achieved.

The blending proportion of the cross-linking auxiliary agent is in a range of, e.g., 0.05 to 1.5 parts by mass, or preferably 0.1 to 1.0 parts by mass based on 100 parts by mass of the polymer.

The foaming auxiliary agent is blended as necessary to efficiently cause foaming due to the OBSH and/or ADCA at a temperature (in a range of, e.g., 140 to 180°C) during the step of producing a hollow member (specifically, during the baking finishing of an automobile).

Examples of the foaming auxiliary agent include a urea compound and a zinc compound such as zinc stearate or zinc oxide. Preferably, the zinc compound is used.

These foaming auxiliary agents can be used alone or in combination. Preferably, the zinc stearate and the zinc oxide are used in combination.

The blending proportion of the foaming auxiliary agent is in a range of, e.g., 1 to 20 parts by mass, or preferably 2 to 10 parts by mass based on 100 parts by mass of the polymer.

The softener is blended as necessary in the foaming composition for filling and sealing so as to soften the polymer and set the foaming composition for filling and sealing to a desired viscosity.

Examples of the softener include drying oils and animal/vegetable oils (such as e.g., paraffins (such as paraffin-based oils), waxes, naphtenes, aromatic oils, asphalts, and flaxseed oils), petroleum-derived oils, terpene polymers, rosin-based resins, terpene-based resins, coumarone-indene-based resins, petroleum-based resins (such as, e.g., aliphatic hydrocarbon resins, aliphatic/aromatic hydrocarbon resins, and aromatic hydrocarbon resins), organic acid esters (such as, e.g., phthalates, phosphoric acid esters, higher fatty acid esters, and alkylsulfonic acid esters), and tackifiers.

These softeners can be used alone or in combination. Preferably, the petroleum-based resin is used alone.

The softening temperature of the softener is in a range of, e.g., 80 to 120°C.

The blending proportion of the softener is in a range of, e.g., 1 to 50 parts by mass, or preferably 5 to 25 parts by mass based on 100 parts by mass of the polymer.

The other additional corrosion inhibitors are corrosion inhibitors other than the hydrocalumite described above, which are used as necessary in combination with the hydrocalumite.

Examples of the other additional corrosion inhibitors include a metal oxide (other than zinc oxide) such as magnesium oxide, and a carbonate such as magnesium carbonate or calcium carbonate. The other additional corrosion inhibitors can be used alone or in combination.

The blending proportion of the other corrosion inhibitors is in a range of, e.g., 6.5 to 200 parts by mass, or preferably 26 to 75 parts by mass based on 100 parts by mass of the hydrocalumite.

To prepare the foaming composition for filling and sealing, the individual components shown above are blended in the blending proportions shown above, and uniformly mixed.

The foaming composition for filling and sealing can be prepared by kneading the components shown above with, e.g., a mixing roll, a pressure kneader, an extruder, or the like.

Kneading conditions include a heating temperature in a range of, e.g., 50 to 130°C, or preferably 95 to 120 °C, and a heating time in a range of, e.g., 0.5 to 30 minutes, or preferably 1 to 20 minutes.

In the preparation, the obtained kneaded product can also be molded into a predetermined shape, and prepared as a preform.

Molding of the kneaded product is performed by, e.g., molding the kneaded product directly into a predetermined shape (e.g., a sheet-like shape) by calender-molding or press-molding. Alternatively, the kneaded product is, e.g., pelletized using a pelletizer or the like, and molded into a predetermined shape using an injection molder or an extrusion molder.

Molding conditions include a molding temperature in a range of, e.g., 60 to 120°C, or preferably 75 to 110°C.

The foaming composition for filling and sealing thus obtained has a viscosity (measured at a temperature of 120 °C and under a pressure of 500 MPa in a flow tester) which is in the range of, e.g., 1000 to 5000 Pa·s.

By heating the foaming composition for filling and sealing of the present invention thus obtained under appropriate conditions to foam it, the foam for filling and sealing of the present invention can be formed.

The foam for filling and sealing has a density (Foam Mass (g)/Foam Volume (cm$^3$)) which is in a range of, e.g., 0.04 to 0.2 g/cm$^3$, or preferably 0.05 to 0.08 g/cm$^3$.

A volume expansion ratio during foaming (= Pre-Foaming Density/Post-Foaming Density) is in a range of, e.g., not less than 5, or preferably 8 to 20 when the OBSH is used alone, and is in a range of, e.g., not less than 8, or preferably 15 to 40 when the ADCA is used alone.

Such a volume expansion ratio allows a gap between members or an inner space of a hollow member to be filled with the foam for filling and sealing with substantially no void space left therein even when the gap or the inner space has a complicated shape, and allows the gap between the members or the inner space of the hollow member to be sealed.

The foam for filling and sealing of the present invention thus obtained can give various effects such as reinforcement, vibration control, sound insulation, dust control, heat insulation, buffering, and watertightness. Therefore, the foam for filling and sealing of the present invention can be used appropriately as fillers/sealers for various industrial products with which a gap between various members and an inner space of a hollow member are to be filled/sealed, such as, e.g., a reinforcement material, a vibration control material, a sound insulator, a dust control material, a heat insulator, a buffering material, and a waterstop material.

To fill and seal a gap between various members and an inner space of a hollow member, e.g., the foaming composition for filling and sealing is placed in the gap between the members to be filled or in the inner space of the hollow member to be filled, and then heated to be foamed to form the foam for filling and sealing, with which the gap between the members and the inner space of the hollow member are filled and sealed, though the process thereof is not particularly limited.

More specifically, in the case of filling and sealing, e.g., the inner space of the hollow member, a fitting member is attached first to the foaming composition for filling and sealing to produce a foaming member for filling and sealing. The fitting member of the foaming member for filling and sealing is mounted in the inner space of the hollow member, and then the foaming composition is foamed by heating to form the foam for filling and sealing, with which the inner space of the hollow member can be filled and sealed.

Examples of such a hollow member include a pillar made of a metal such as steel, iron, or stainless steel in an automobile. After the foaming member for filling and sealing is produced from the foregoing foaming composition for filling and sealing and mounted in the inner space of the pillar, if the foaming composition for filling and sealing is foamed, the obtained foam for filling and sealing allows the vibration and noise of an engine, wind noise, and the like to be effectively prevented from being transmitted to a vehicle interior, while achieving sufficient reinforcement of the pillar.

FIG. 1 is a process step view of a method of filling and sealing an inner space of an automotive pillar using an embodiment of the foaming composition for filling and sealing, the foaming member for filling and sealing, and the foam for filling and sealing of the present invention.

Next, as an embodiment of the filling method using the foam for filling and sealing of the present invention, the method of filling the inner space of the automotive pillar with the foam for filling and sealing to seal the pillar using the foregoing foaming composition for filling and sealing and foaming member for filling and sealing is described.

First, in the method, as shown in FIG. 1(a), a foaming composition for filling and sealing 1 molded into a predetermined shape is placed in a pillar 2.

The foaming composition for filling and sealing 1 is formed into, e.g., a sheet shape.

The pillar 2 includes an inner panel 4 and an outer panel 5 each having a generally depressed cross-sectional shape. The inner panel 4 is formed such that the center portion thereof protrudes from the peripheral end portion thereof on one side (lower side in FIG. 1) of the pillar 2 in the thickness direction thereof.

The outer panel 5 is formed such that the center portion thereof protrudes from the peripheral end portion thereof on the other side (upper side in FIG. 1) of the pillar 2 in the thickness direction thereof.

To place the foaming composition for filling and sealing 1 in the pillar 2, a fitting member 3 is first attached to the foaming composition for filling and sealing 1 to produce a foaming member for filling and sealing 6 including the fitting member 3 and the foaming composition for filling and sealing 1. Subsequently, the fitting member 3 of the foaming member for filing and sealing 6 is attached to the inner peripheral surface of the pillar 2.

Alternatively, the fitting member 3 can also be insert-molded together with the kneaded product during the molding of the foaming composition for filling and sealing 1.

After the foaming composition for filling and sealing 1 is placed in the inner panel 4 via the fitting member 3, the peripheral end portions of the inner panel 4 and the outer panel 5 are caused to face and touch each other and joined together. As a result, the pillar 2 is formed as a closed cross section.

More specific examples of such a pillar 2 include a front pillar of a vehicle body, a side pillar thereof, and a rear pillar thereof.

Then, in the method, using heat in the subsequent dry line step during baking finishing, the pillar 2 is heated at a temperature in a range of, e.g., not less than 140 °C and not more than 180 °C, or preferably not less than 160 °C and not more than 180 °C. In this manner, as shown in FIG. 1 (b), the foaming composition for filling and sealing 1 is foamed to be able to form a foam for filling and sealing 9. Note that, when a cross-linking agent (and a cross-linking auxiliary agent) are contained in the foaming composition for filling and sealing 1, the foaming composition for filling and sealing 1 is cross-linked and cured simultaneously with the foaming thereof described above.

With the foam for filling and sealing 9, the inner space of the pillar 2 can be filled with substantially no void space left therein to be sealed.

Note that the shape of the foaming composition for filling and sealing 1, the position and orientation where the foaming composition for filling and sealing 1 is placed, and the number of the foaming compositions for filling and sealing 1 to be placed are selectively and appropriately determined in accordance with the shape of the pillar 2 or the like.

The foam for filling and sealing 9 obtained by foaming the foregoing foaming composition for filling and sealing 1 has excellent rust prevention.

Therefore, even when the foaming composition for filling and sealing 1 is foamed and the inner space of the pillar 2 is filled with the foregoing foam for filling and sealing 9 by the filling method using the foregoing foam for filling and sealing 9 and then the pillar 2 made of a metal is placed in a high-temperature and high-humidity atmosphere, it is possible to effectively prevent rust from developing at the inner peripheral surface of the pillar 2.

Specifically, in the foam for filling and sealing 9, a sulfinic acid as the decomposed residue of the OBSH and/or a cyanic acid as the decomposed residue of the ADCA may react with moisture contained in the high-temperature and high-humidity atmosphere in which the pillar 2 is placed to produce sulfinate ions and/or cyanate ions (acid ions), and cause rust at the inner peripheral surface of the pillar 2. However, it is presumed that the hydrocalumite contained in the foregoing foaming composition for filling and sealing can trap (catch) the foregoing acid ions to thus effectively prevent the development of rust described above.

EXAMPLES

While in the following, the present invention will be described more specifically with reference to Examples and Comparative Examples, the present invention is not limited thereto.

Examples 1-17, and Comparative Examples 1 and 2

In accordance with the blending formulations shown in Tables 1 and 2, the individual components were kneaded using a 6-inch mixing roll at a rotation speed of $15\ min^{-1}$ and 110°C for 10 minutes to prepare kneaded products (foaming compositions for filling and sealing). Then, the prepared kneaded products were molded by pressing at 90°C into sheets each having a thickness of 3 mm.

(Evaluation)

Each of the sheets obtained in Examples and Comparative Examples was individually evaluated for the following items. The result of the evaluation is shown in Tables 1 and 2.

(1) Expansion Ratio

The sheets each having a thickness of 3 mm were punched into disc shapes each having a diameter of 19 mm to produce samples. Each of the produced samples was heated at 160 °C for 20 minutes to be foamed. Then, from the densities of the sheets before and after foaming, expansion ratios were calculated based on the following formula:

$$\text{Volume Expansion Ratio} = \text{Pre-Foaming Density/Post-Foaming Density.}$$

(2) Corrosion

The sheets each having a thickness of 3 mm were cut into sizes of 10 mm x 80 mm to produce samples. Each of the produced samples was placed on the surface of a steel plate (cold-rolled steel plate (SPCC-SD) available from Nippon Testpanel Co., Ltd.) having a thickness of 0.7 mm and a size of 25 mm x 150 mm, and then heated at 160°C for 20 minutes to be foamed to produce foams.

. Thereafter, each of the foams was cooled (allowed to cool) at a room temperature for 1 hour, and then placed in a thermo-hydrostat at 50 °C and 95%RH for 15 days.

Thereafter, each of the foams was stripped from the steel plate, and the presence or absence of corrosion at the surface of the steel plate was visually checked.

Table 1

| | | | Ex. 1 | Ex. 2 | Ex. 3 | Ex. 4 | Ex. 5 | Ex. 6 | Ex. 7 | Comp, Ex.1 |
|---|---|---|---|---|---|---|---|---|---|---|
| Blending Formulation of Foaming Composition for Filling and Sealing (Parts By Mass) | Polymers | EVA | 100 | 100 | 100 | 100 | 100 | - | - | 100 |
| | | PE | - | - | - | - | - | 100 | 100 | - |
| | Foaming Agent | OBSH | 14 | 14 | 14 | 14 | 14 | 14 | 14 | 14 |
| | Corrosion Inhibitors | Carbonate-Type Hydrocalumite | 2 | 5 | 20 | - | 5 | 5 | - | - |
| | | Nitrite-Type Hydrocalumite | - | - | - | 2 | - | - | 5 | - |
| | | Magnesium Oxide | 1.3 | 1.3 | 1.3 | 1.3 | - | - | - | 1.3 |
| | Organic Peroxide (Cross-Linking Agent) | DCP | 5 | 5 | 5 | 5 | 5 | 5 | 5 | 5 |
| Evaluation | Expansion Ratio | | 11.8 | 9.0 | 9.1 | 11.2 | 10.0 | 9.0 | 10.5 | 11.5 |
| | Presence or Absence of Corrosion (After Storage at 50 °C and 95%RH for 15 Days) | | Absent | Absent | Absent | Absent | Absent | Absent | Absent | Present |

Table 2

| | | | Ex. 8 | Ex. 9 | Ex. 10 | Ex 11 | Ex. 12 | Ex. 13 | Ex. 14 | Ex. 15 | Ex. 16 | Ex. 17 | Comp. Ex. 2 |
|---|---|---|---|---|---|---|---|---|---|---|---|---|---|
| Blending ormulation of Foaming Composition for Filling and Sealing (Parts By Mass) | Polymers | EVA | 100 | 100 | 100 | 100 | 100 | 100 | 100 | 100 | - | - | 100 |
| | | PE | - | - | - | - | - | - | - | - | 100 | 100 | - |
| | Foaming Agent | ADCA | 20 | 20 | 20 | 20 | 20 | 20 | 20 | 20 | 20 | 20 | 20 |
| | Corrosion Inhibitors | Carbonate-Type Hydrocalumite | 2 | - | 1.8 | 2 | - | 2.5 | 5 | 10 | 2 | - | - |
| | | Nitrite-Type Hydrocalumite | - | 2 | - | - | 2 | - | - | - | - | 5 | - |
| | | Magnesium Oxide | 1.5 | 1.5 | 1.5 | - | - | 1.5 | 1.5 | 1.5 | - | - | 1.5 |
| | Organic Peroxide (Cross-Linking Agent) | DCP | 5 | 5 | 5 | 5 | 5 | -5 | 5 | 5 | 5 | 5 | 5 |
| | Foaming Auxiliary Agents Foaming Auxiliary | Zinc Oxide Zinc Oxide | 5 | 5 | 5 | 5 | 5 | 5 | 5 | 5 | 5 | 5 | 5 |
| | | Zinc Stearate | 5 | 5 | 5 | 5 | 5 | 5 | 5 | 5 | 5 | 5 | 5 |
| | Cross-Linking Auxiliary Agent | TMPTA | 0.3 | 0.3 | 0.3 | 0.3 | 0.3 | 0.3 | 0.3 | 0.3 | 0.3 | 0.3 | 0.3 |
| | Softener | Aliphatic Hydrocarbon Resin | 15 | 15 | 15 | 15 | 15 | 15 | 15 | 15 | 15 | 15 | 15 |
| Evaluation | Expansion Ratio (Times) | | 24.4 | 24.6 | 25.4 | 24.4 | 24.6 | 15.2 | 12.5 | 9.9 | 17.8 | 22.4 | 25.0 |
| | Presence or Absence of Corrosion (After Storage at 50 °C and 95%RH for 15 Days) | | Absent | Absent | Absent | Absent | Absent | Absent | Absent | Absent | Absent | Absent | Present |

Each of the components in Tables 1 and 2 is described below in detail.

EVA: Ethylene-vinyl acetate copolymer available under the trade name of "EVAFLEX EV560" and having a vinyl acetate content of 14 mass%, an MFR of 3.5 g/10 min (measured according to JIS K 7210 (1999) at a heating temperature of 190 °C under a load of 21.18 N)

PE: polyethylene available under the trade name of "Sumikathene G201" and having an MFR of 2 g/10 min (measured according to JIS K 6922-1 (1997) at a heating temperature of 190 °C under a load of 21.18 N)

OBSH: 4,4'-oxybis(benzene sulfonyl hydrazide) available from Sankyo Kasei Co., Ltd. under the trade name of "Celmike SX"

Carbonate-Type Hydrocalumite: available from Katsuta Kako K.K. under the trade name of "E 13" and having a spherical shape and an average particle size of 8 $\mu$m

Nitrite-Type Hydrocalumite: available from Nippon Chemical Industrial Co., Ltd. under the trade name of "Sorukatto" and having a spherical shape

Magnesium Oxide: Kyowamag 150 available from Kyowa Chemical Industry Co., Ltd. and having an average particle size of 6 $\mu$m

DCP: Dicumyl peroxide available from NOF Corporation Co., Ltd. under the trade name of "PERCUMYL D-40MBK" and having a DCP content of 40% and a silica plus EPDM content of 60 mass%

ADCA: Azodicarbonamide available from Eiwa Chemical Industrial Co., Ltd. under the trade name of "Vinyhole AC#3C"

Magnesium Carbonate: available from Konoshima Chemical Co., Ltd. under the trade name of "Magnesium Carbonate Gold Star"

Zinc Oxide: available from Mitsui Mining & Smelting Co., Ltd. under the trade name of "Zinc Oxide #2"

Zinc Stearate: available from Sakai Chemical Industry Co., Ltd. under the trade name of "SZ-P"

TMPTA: Trimethylol propane triacrylate available from Osaka Organic Chemical Industry Ltd. under the trade name of "TMP3A"

Aliphatic Hydrocarbon Resin: available from Nippon Zeon Co., Ltd. under the trade name of "Quintone G100B" and having a softening temperature of 100 °C (measured by a ring and ball method at a temperature rising rate of 5 °C/min)

## Claims

1. A foaming composition for filling and sealing, containing:

   a polymer;
   4,4'-oxybis(benzene sulfonyl hydrazide) and/or azodicarbonamide; and
   a hydrocalumite.

2. A foaming composition for filling and sealing according to Claim 1, wherein the polymer is a resin and/or rubber obtained through polymerization of a monomer having at least one ethylenically unsaturated double bond.

3. A foaming composition for filling and sealing according to Claim 1, wherein the polymer is a vinyl copolymer and/or olefin polymer.

4. A foaming composition for filling and sealing according to Claim 3, wherein the vinyl copolymer is an ethylene-vinyl acetate copolymer.

5. A foaming composition for filling and sealing according to Claim 3, wherein the olefin polymer is polyethylene.

6. A foaming composition for filling and sealing according to Claim 1, wherein a total blending proportion of the 4,4'-oxybis(benzene sulfonyl hydrazide) and the azodicarbonamide is in a range of 5 to 30 parts by mass based on 100 parts by mass of the polymer.

7. A foaming composition for filling and sealing according to Claim 1, wherein the hydrocalumite is a nitrite-type hydrocalumite and/or a carbonate-type hydrocalumite.

8. A foaming composition for filling and sealing according to Claim 1, wherein a blending proportion of the hydrocalumite is in a range of 14 to 143 parts by mass based on 100 parts by mass of the 4,4'-oxybis(benzene sulfonyl hydrazide) or in a range of 9 to 50 parts by mass based on 100 parts by mass of the azodicarbonamide.

9. A foaming composition for filling and sealing according to Claim 1, further containing:

a cross-linking agent,
wherein the cross-linking agent contains an organic peroxide.

10. A foaming composition for filling and sealing according to Claim 9, wherein a blending proportion of the cross-linking agent is in a range of 0.1 to 10 parts by mass based on 100 parts by mass of the polymer.

11. A foaming member for filling and sealing, comprising:

a foaming composition for filling and sealing containing a polymer, 4,4'-oxybis(benzene sulfonyl hydrazide) and/or azodicarbonamide, and a hydrocalumite; and
a fitting member attached to the foaming composition for filling and sealing to be capable of being mounted in an inner space of a hollow member.

12. A foam for filling and sealing obtained by foaming a foaming composition for filling and sealing containing a polymer, 4,4'-oxybis(benzene sulfonyl hydrazide) and/or azodicarbonamide, and a hydrocalumite.

13. A filling method using a foam for filling and sealing, comprising the steps of:

placing a foaming composition for filling and sealing containing a polymer, 4,4'-oxybis(benzene sulfonyl hydrazide) and/or azodicarbonamide, and a hydrocalumite in an inner space of a hollow member made of a metal; and
foaming the foaming composition for filling and sealing to produce the foam for filling and sealing.

FIG. 1

(a)

(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005097586 A
- JP 2008007704 A

- JP 2005139211 A